# EUROPÄISCHE PATENTSCHRIFT

(11) **EP 1 675 670 B1**
(45) Veröffentlichungstag und Bekanntmachung des Hinweises auf die Patenterteilung: **05.10.2011**
(21) Anmeldenummer: 04790010.5
(22) Anmeldetag: 19.10.2004
(51) Int. Cl.: B01D 71/02, B01D 69/00, B01D 39/20, B01D 39/10

(54) **NANOPORÖSE FILTER- ODER TRÄGERMEMBRAN SOWIE VERFAHREN ZUR HERSTELLUNG**
NANOPOROUS FILTER OR SUPPORT MEMBRANE AND METHOD FOR PRODUCTION THEROF
MEMBRANE FILTRANTE OU PORTEUSE NANOPOREUSE ET SON PROCEDE DE PRODUCTION

(30) Priorität: 23.10.2003 DE 10349471
(43) Veröffentlichungstag der Anmeldung: 05.07.2006
(73) Patentinhaber: Fraunhofer-Gesellschaft zur Förderung der angewandten Forschung e.V., 80686 München (DE)
(72) Erfinder: HEILMANN, Andreas, 09573 Augustusburg (DE); TEUSCHER, Nico, D-06110 Halle (DE); GUMBSCH, Peter, 79194 Gundelfingen (DE)
(74) Vertreter: Gagel, Roland
(86) Internationale Anmeldenummer: PCT/DE2004/002321
(87) Internationale Veröffentlichungsnummer: WO 2005/039743

(56) Entgegenhaltungen:
- FR-A- 1 182 379
- DATABASE WPI Section Ch, Week 198916 Derwent Publications Ltd., London, GB; Class J01, AN 1989-118038 XP002322480 -& JP 01 063005 A (SHOWA ALUMINIUM CO LTD) 9. März 1989 (1989-03-09)
- DATABASE WPI Section Ch, Week 198917 Derwent Publications Ltd., London, GB; Class J01, AN 1989-127552 XP002322481 -& JP 01 075016 A (SHOWA ALUMINIUM CO LTD) 20. März 1989 (1989-03-20)

## Beschreibung

### Technisches Anwendungsgebiet

Die vorliegende Erfindung betrifft eine nanoporöse Filter- oder Trägermembran sowie ein Verfahren zu deren Herstellung, bei dem durch anodische Oxidation eines metallischen Ausgangssubstrats oder einer metallischen Ausgangsfolie eine poröse Schicht mit Poren eines vorgebbaren Porendurchmessers und einer vorgebbaren Porentiefe gebildet und ggf. vom restlichen Ausgangssubstrat abgelöst wird, und anschließend die Poren beidseitig geöffnet werden, um die nanoporöse Membran zu erhalten.

Nanoporöse synthetische Filter- oder Trägermembrane werden heutzutage in sehr unterschiedlichen Anwendungen genutzt, bspw. in Batterien, Sensoren, Bioreaktoren, für Gewebekulturen oder als feste Träger für andere Materialien wie z. B. Katalysatoren. Die Hauptanwendung besteht jedoch in der Nutzung der Membrane in der Filtertechnik.

Nanoporöse Aluminiumoxidschichten, die durch anodische Oxidation eines Aluminiumblechs oder einer Aluminiumfolie erzeugt werden, besitzen eine regelmäßige Porenstruktur mit parallelen, senkrecht zur Oberfläche orientierten Poren. Die mittlere Porengröße beträgt hierbei zwischen 10 und 450 nm. Derartige nanoporöse Schichten werden als Template-Material für die Abformung anderer Materialien, wie bspw. Metalle, Halbleiter oder Kunststoffe, eingesetzt. Weiterhin ist der Einsatz als Trägermaterial für Metallpartikel, für Nanodrähte, für elektrolumineszierende Materialien und für photonische Kristalle bekannt. Die Porenstrukturen können auch als Katalysatorsupport, als Plattform für Gassensoren und Sensorarrays sowie für die Einlagerung von radioaktiven Tracern dienen. Bei derartigen Anwendungen verbleibt die nanoporöse Aluminiumoxidschicht auf dem Aluminiumsubstrat, so dass keine nanoporöse Membran gebildet wird.

### Stand der Technik

Die Porengröße und die Porentiefe werden bei der anodischen Oxidation über die Höhe der angelegten Spannung, die Stromstärke, die Anodisierungszeit sowie den eingesetzten Elektrolyten beeinflusst. Aus H. Masuda et al., Highly ordered nanochannel-array architecture in anodic alumina, Appl.- Phys. Lett. 71 (19), 1997, 2770 - 2772, ist eine Technik bekannt, mit der auch der Porenabstand zum Erhalt der gewünschten nanoporösen Eigenschaften beeinflusst werden kann. Bei dem Verfahren dieser Druckschrift werden in die Oberfläche des Ausgangssubstrats mechanisch winzige Vertiefungen in gleichmäßigem Abstand eingebracht, die als Ausgangspunkte für die Entstehung der Poren bei der anodischen Oxidation dienen. Auf diese Weise lassen sich sehr regelmäßige Porenverteilungen mit einem vorgebbaren, durch die Anordnung der Vertiefungen definierten Abstand erzeugen.

Für die Herstellung von freitragenden nanoporösen Filter- oder Trägermembranen muss die poröse Schicht nach der anodischen Oxidation vom Ausgangssubstrat abgelöst werden. Aus W. R. Rigby et al., An anodizing process for the production of inorganic microfiltration membranes, Trans. Inst. Metal Finish. 68 (1990), 95 - 99, ist ein Verfahren zur Herstellung freitragender Aluminiumoxidmembranschichten bekannt, bei dem durch anodische Oxidation des metallischen Ausgangssubstrates eine poröse Schicht gebildet und vom restlichen Ausgangssubstrat abgelöst wird. Die Ablösung erfolgt durch kontrollierte Verringerung der elektrischen Spannung nach der Fertigstellung der nanoporösen Schicht. Durch diese Reduzierung der Spannung wird die entstehende Barriereschicht zwischen der nanoporösen Schicht und der verbleibenden Metallunterlage drastisch reduziert, so dass die nanoporöse Schicht problemlos abgelöst werden kann.

Anstelle der Verwendung eines Ausgangssubstrats kann auch eine Ausgangsfolie eingesetzt werden, die bei der anodischen Oxidation bereits vollständig von den Poren durchdrungen wird. Bei dieser Technik ist daher keine Ablösung der nanoporösen Schicht von einem Restsubstrat erforderlich. Nach einem sich anschließenden nasschemischen-Ätzschritt wird in beiden Fällen eine nanoporöse Filter- oder Trägermembran mit beidseitig offenen Poren erhalten.

Derartige Membrane für die Filtration sind kommerziell erhältlich und durch eine organische Supportmatrix, einen Polyethylenring, mechanisch stabilisiert.

Bekannte kommerziell erhältliche Filtermembrane, bspw. mit der Bezeichnung ANOPORE^{™} mit einer Dicke von 60 µm und mittleren Porengrößen von 200 nm, 100 nm und 20 nm, weisen jedoch sehr geringe Durchflussraten von ca. 2 - 5 ml/min/cm² auf, da das Aspektverhältnis der Poren zwischen 1 : 300 und 1 : 3000 liegt. Die hohen Porenaspektverhältnisse resultieren aus der relativ großen Membrandicke von mindestens 20 µm, die für eine mechanische Stabilität der Membran erforderlich ist. Das hohe Aspektverhältnis behindert auch die Anwendung der Membrane für eine Kokultivierung von Zellkulturen auf beiden Seiten der Porenmembran mit der Zielstellung, eine Kommunikation der beiden Zellkulturen durch die beidseitig offenen Poren hindurch mittels Diffusion von Flüssigkeiten zu erreichen, da ein Austausch von Wirkstoffen oder metabolischen Stoffen aufgrund dieses hohen Aspektverhältnisses durch die Membran hindurch unwahrscheinlich ist.

JP 1063005 A und in gleicher Weise JP 1075016 A beschreiben eine Filtermembran mit eine dünne Membranschicht mit feinen Poren, die durch eine metallisch Aluminiumschicht (ohne Poren) stabilisiert wird. Bei dem Verfahren zur Herstellung dieser Membran wird eine dünne Aluminium-Folie auf einer Seite elektrolytisch bis in eine bestimmten Tiefe geätzt, um Vertiefungen darin zu erzeugen. Auf der gegenüberliegenden Seite wird durch anodischen Oxidation eine Oxidschicht mit feinen Poren erzeugt, die anschließend zu den Vertiefungen der anderen Seite hin geöffnet werden

Die Aufgabe der vorliegenden Erfindung besteht daher darin, eine nanoporöse Filter- oder Trägermembran sowie ein Verfahren zu deren Herstellung anzugeben, die mechanisch stabil ist und sich mit hoher offener Porosität und einstellbarer hoher Durchflussrate realisieren lässt.

### Darstellung der Erfindung

Die Aufgabe wird mit dem Verfahren sowie der nanoporösen Filter- oder Trägermembran gemäß den Patentansprüchen 1 und 8 gelöst. Vorteilhafte Ausgestaltungen des Verfahrens sowie der Membran sind Gegenstand der Unteransprüche oder lassen sich aus der nachfolgenden Beschreibung sowie den Ausführungsbeispielen entnehmen.

Beim vorliegenden Verfahren zur Herstellung einer nanoporösen Filter- oder Trägermembran wird in bekannter Weise durch anodische Oxidation eines metallischen Ausgangssubstrats oder einer metallischen Ausgangsfolie eine poröse Schicht mit Poren eines vorgebbaren Porendurchmessers und einer vorgebbaren Porentiefe gebildet und, falls vorhanden, vom restlichen Ausgangssubstrat abgelöst. Anschließend werden die Poren beidseitig geöffnet, um die nanoporöse Membran zu erhalten. Das Verfahren zeichnet sich dadurch aus, dass im Falle eines Ausgangssubstrats vor der anodischen Oxidation die Oberfläche des Ausgangssubstrats durch Erzeugung von Vertiefungen strukturiert wird, deren laterale Dimensionen den Porendurchmesser um ein Vielfaches übersteigen. Im Falle einer Ausgangsfolie wird diese ebenfalls an einer oder beiden Oberflächen in gleicher Weise strukturiert. In einer alternativen Ausgestaltung wird unabhängig davon, ob ein Ausgangssubstrat oder eine Ausgangsfolie eingesetzt wird, nach der anodischen Oxidation zumindest eine Oberfläche der Membran durch Erzeugen von Vertiefungen strukturiert, deren laterale Dimensionen den Porendurchmesser um ein Vielfaches übersteigen.

Durch sämtliche der vorgenannten Alternativen, die sich selbstverständlich auch kombinieren lassen, wird eine nanoporöse Filter- oder Trägermembran erhalten, die neben den einzelnen Poren an einer oder beiden Oberflächen die zusätzlichen Vertiefungen aufweist. Auf diese Weise wird die Membran durch die zwischen den Vertiefungen entstehenden dickeren Strukturen, im Folgenden auch als Stege bezeichnet, stabilisiert, während die Durchflussraten durch die durch die Vertiefungen gebildeten dünneren Membranbereiche vorgegeben werden. Diese dünnen Bereiche können daher deutlich dünner realisiert werden als bei vergleichbaren Membranen des Standes der Technik, so dass ein geringeres Aspektverhältnis der Poren erreicht wird. Die Vertiefungen werden dabei vorzugsweise mit einer Tiefe von zumindest 20 µm erzeugt, so dass die die Stabilität der Membran bewirkenden Stege in jedem Falle eine Dicke von > 20 µm aufweisen.

Das Aspektverhältnis der Poren lässt sich beim vorliegenden Verfahren über die Tiefe der Vertiefungen - in Verbindung mit den sonstigen Anodisierungsparametern - einstellen, so dass eine gezielte Erhöhung und Steuerung der Durchflussrate möglich ist. Die mechanische Stabilisierung durch die dickeren Zwischenbereiche, die Stege, ermöglicht den Einsatz der Membrane bei höheren Flüssigkeitsdrücken (bis 5hPa (5 bar)) ohne organische oder andere anorganische Supportmaterialien. Eine direkte Kommunikation von auf beiden Seiten der Membran aufgebrachten adhärenten Zellkulturen, die durch Wirkstoffe oder metabolische Stoffe erfolgen kann, wird damit verbessert bzw. überhaupt erst möglich.

Als Ausgangssubstrat oder Ausgangsfolie lassen sich metallische Materialien einsetzen, in denen durch anodische Oxidation entsprechende Poren erzeugt werden können. Das bevorzugte Material ist hierbei Aluminium. Im Folgenden wird daher das vorliegende Verfahren sowie die damit herstellbare Membran unter Bezugnahme auf dieses Material erläutert, ohne die Erfindung auf dieses Material einzuschränken.

Werden auf beiden Seiten der Ausgangsfolie bzw. deren Membran Vertiefungen erzeugt, so werden diese derart symmetrisch zueinander angeordnet, dass sie einander gegenüberliegen. Auf diese Weise wird sichergestellt, dass die zwischen den Vertiefungen sich bildenden dicken Stege eine maximal mögliche Dicke aufweisen. Die Vertiefungen müssen dabei selbstverständlich nicht regelmäßig über die Oberfläche verteilt werden, sondern können auch unregelmäßig und mit unterschiedlichen lateralen Dimensionen ausgebildet sein. Vorzugsweise wird bei der Strukturierung der Oberfläche des Ausgangssubstrats bzw. der Ausgangsfolie ein mechanisches Strukturierungsverfahren, bspw. ein Prägeverfahren, eingesetzt. Selbstverständlich sind auch andere Strukturierungstechniken möglich, mit denen eine geeignete Strukturierung der metallischen Oberfläche erreicht wird. Die nachträgliche Strukturierung der nanoporösen Membran erfolgt vorzugsweise durch eine Ionenätztechnik.

### Kurze Beschreibung der Zeichnungen

Das vorliegende Verfahren sowie die vorliegende nanoporöse Filter- oder Trägermembran werden nachfolgend anhand von Ausführungsbeispielen in Verbindung mit den Zeichnungen nochmals erläutert. Hierbei zeigen:
Fig. 1 eine Prinzipskizze zur Veranschaulichung des vorliegenden Verfahrens anhand von zwei 3D-Darstellungen;
Fig. 2 eine Prinzipskizze zur Veranschaulichung des vorliegenden Verfahrens gemäß dem Ausführungsbeispiel der Figur 1; und
Fig. 3 eine Prinzipskizze einer erfindungsgemäßen Membran gemäß einem weiteren Ausführungsbeispiel in 3D-Darstellung.

### Wege zur Ausführung der Erfindung

In einem ersten Ausführungsbeispiel wird eine Aluminiummetallfolie oder eine Aluminiummetallplatte eingesetzt, in der auf der Oberfläche Vertiefungen erzeugt werden. Diese Vertiefungen werden im vorliegenden Ausführungsbeispiel durch das Aufprägen mit einem Stempel erzeugt.

Der Stempel kann durch mechanische Bearbeitung erhalten werden, wenn er bspw. aus Stahl besteht. In diesem Falle kann ein Strukturabstand von ca. 500 µm erreicht werden. Der Stempel kann auch durch Verwendung einer lithographischen Technik erhalten werden. In diesem Fall wird als Stempelmaterial Silizium eingesetzt, wobei ein Strukturabstand von ca. 5 µm erzeugt werden kann.

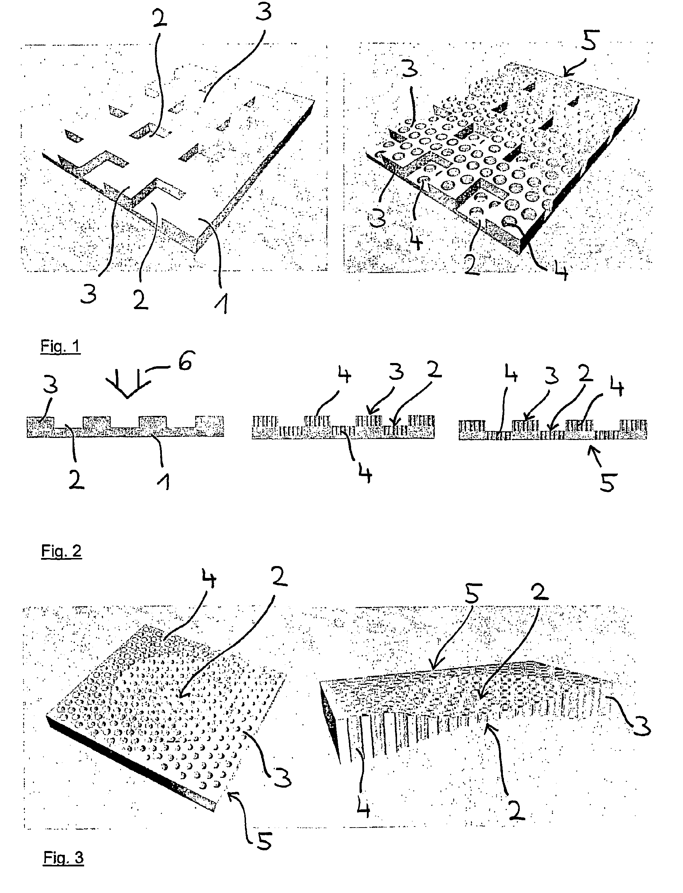

Der Stempel 6 wird durch Verwendung einer Pressvorrichtung auf das Aluminiumblech oder die Aluminiumfolie (Dicke ca. 50 µm) übertragen. Die Figur 1 zeigt im linken Teil das Ergebnis dieser Strukturierung. In der Figur ist die entsprechend geprägte Aluminiumfolie 1 zu erkennen, in deren Oberfläche die Vertiefungen 2 eingeprägt sind. Die entsprechende Querschnittsdarstellung ist im linken Teil der Figur 2 zu erkennen. Zwischen den Vertiefungen 2 entstehen auf diese Weise dicke Stege 3, die der späteren Stabilisierung der Membran dienen.

Die voneinander beabstandeten Vertiefungen 2 haben im vorliegenden Beispiel eine Tiefe von zumindest 20 µm, so dass eine ausreichende Stabilisierung der Membran durch die Stege 3 erhalten wird. Durch eine vorhergehende Elektropolierung der Aluminiumplatte, bspw. durch Polieren in einem Gemisch aus Phosphorsäure und Schwefelsäure bei 60° C und 10 V, werden bestehende Oberflächenunebeneinheiten eingeebnet und es kann eine sehr gute Qualität der geprägten Strukturen erreicht werden. Eine weitere Möglichkeit, die Oberfläche der Aluminiumfolie 1 bzw. der Aluminiumplatte in der gewünschten Form zu strukturieren kann auch bspw. darin bestehen, einen oder mehrere speziell angespitzte ultradünne Wolframdrähte in die Aluminiumoberfläche einzudrücken. Durch geeignete Wahl der Einspannung bzw. Halterung der Wolframdrähte kann auch die Tiefe des Eindrucks und somit der entstehenden Vertiefungen durch die Wolframspitze festgelegt werden. Mit dieser Technik kann die Anzahl und Größe der Oberflächenvertiefungen im Aluminium beliebig festgelegt und den Anforderungen für die Filtration angepasst werden. Mit beiden Möglichkeiten wird eine Oberflächenstrukturierung erzeugt, die durch regelmäßige oder unregelmäßige Vertiefungen 2 gekennzeichnet ist. Die vertikale Abmessung der Vertiefungen 2 bestimmt später die maximale Dicke des wirksamen Membranfilters und damit über das Aspektverhältnis zwischen Porengröße und Porenlänge auch die Durchflussraten.

Nach dem Einprägen der Vertiefungen 2 erfolgt die anodische Oxidation der Aluminiumfolie 1 bzw. der Aluminiumplatte. Dazu finden die für die anodische Oxidation bekannten Säuren Oxalsäure, Schwefelsäure oder Phosphorsäure Anwendung. Durch die anodische Oxidation entstehen senkrecht zur Oberfläche Aluminiumoxidnanoporen 4, deren Porengröße durch die angelegte Spannung beim Anodisieren bestimmt und durch weitere Parameter, wie Elektrolytkonzentration und Temperatur, beeinflusst wird. Die Tiefe der Poren wird durch die Anodisierungszeit bestimmt. Der rechte Teil der Figur 1 zeigt schematisch die durch den anodischen Oxidationsprozess entstandenen Poren 4, die in den vorliegenden Figuren nicht maßstäblich dargestellt sind. Die Poren weisen vielmehr einen deutlich geringeren Porendurchmesser sowie deutlich geringere Porenabstände als in den Figuren ersichtlich auf.

Im Falle der Aluminiummetallfolie 1 des vorliegenden Ausführungsbeispiels wird der Anodisierungsprozess solange durchgeführt, bis die geprägten dünneren Folienbereiche vollständig oder nahezu vollständig anodisiert sind. Bei Einsatz eines Blechs bzw. einer Metallplatte wird der Anodisierungsprozess nach Erreichen der erforderlichen vertikalen Tiefe der Porenstrukturen abgebrochen.

Der mittlere Teil der Figur 2 zeigt schematisch die Bildung dieser Poren 4 beim Anodisierungsprozess, wobei die Metallfolie 1 in diesem Falle in den durch die Vertiefungen entstehenden dünneren Bereichen nicht vollständig von den Poren 4 durchdrungen ist.

In einem weiteren Prozessschritt wird schließlich mittels eines starken Oxidationsmittels, wie bspw. Quecksilberchlorid, der restliche Teil des Aluminiums abgeätzt, wie dies im rechten Teil der Figur 2 zu erkennen ist. Im Fall der anodisch oxidierten Aluminiumfolien werden hierbei lediglich die auf der Rückseite verbliebenen Aluminiumreste zwischen verbleibenden Aluminiumstegen abgeätzt. Bei Einsatz von Aluminiumplatten wird solange geätzt, bis die Aluminiumoxidporenrückseite sichtbar wird. In beiden Fällen wird der Ätzprozess so gesteuert, dass in jedem Falle mechanisch stabilisierende Aluminiumstege 3 zwischen den Aluminiumoxidporen 4 stehen bleiben.

Durch einen weiteren Ätzschritt, der in den Figuren nicht dargestellt ist, wird die Membran 5 noch weiter abgedünnt, um beidseitig offene Porenstrukturen zu erhalten. Werden beide Seiten der Membran gleichzeitig geätzt, so existiert ein zeitlich begrenztes Prozessfenster, in dem die Poren auf der Rückseite offen und auf der Vorderseite die Porenwände noch nicht in sich zusammen gefallen sind. Wird die Vorderseite der Porenmembran abgedeckt, kann der Prozess der Porenöffnung auf der Rückseite besser gesteuert werden. Als Resultat entsteht eine nanoporöse Filter- oder Trägermembran, wie sie im rechten Teil der Figur 1 ersichtlich ist. Die vollständig prozessierte Membran ist dadurch gekennzeichnet, dass einzelne sehr dünne nanoporöse Oxidbereiche, die durch die Vertiefungen 2 gebildet werden, durch die dicker liegenden Zwischenbereiche, die Aluminiumstege 3, mechanisch stabilisiert sind. Aufgrund dieser mechanischen Stabilisierung lassen sich die sehr dünnen Bereiche ohne Rücksicht auf Stabilitätserfordernisse gezielt in der Dicke einstellen, so dass geringe Aspektverhältnisse bis ca. 1 : 5 zwischen Porendurchmesser und Porentiefe erreicht werden und somit deutlich höhere Durchflussraten möglich sind als bei frei tragenden gleichartigen Membranen ohne diese mechanische Stabilisierung.

Die Korrosionsstabilität der Aluminiumstege 3 wird durch die native Aluminiumoxidschicht gesichert und kann zusätzlich durch einen weiteren Oxidationsschritt verstärkt werden. Ggf. kann auch durch eine nachträgliche Beschichtung der gesamten Membran, bspw. durch Plasmapolymerisation oder Polymersputtern, eine zusätzliche Oberflächenpassivierung für Anwendungen im Zellkulturbereich oder eine Oberflächenhydrophobierung für Anwendungen im Filtrationsbereich erfolgen.

Figur 3 zeigt ein weiteres Ausführungsbeispiel einer nanoporösen Filter- oder Trägermembran, wie sie gemäß einer anderen Ausführungsform des vorliegenden Verfahrens erhalten wird. Bei dieser Ausführungsform wird zur Verringerung des Aspektverhältnisses zwischen Porengröße und Porenlänge bei gleichzeitiger Stabilisierung der Membran die Strukturierung erst nach der anodischen Oxidation durch einen selektiven Materialabtrag an der nanoporösen Aluminiumoxidmembran durchgeführt. Dazu wird zunächst durch anodische Oxidation eine relativ dicke Membranschicht von ca. 50 µm auf einer Aluminiumplatte erzeugt und anschließend vom Restsubstrat abgelöst. Die Ablösung kann hierbei mit dem in der Beschreibungseinleitung genannten Verfahren von Rigby et al. erfolgen. In der auf diese Weise erhaltenen abgelösten Membran 5 werden in gleicher Weise wie im vorangehenden Ausführungsbeispiel erläutert, beidseitig offene Poren durch einen Ätzschritt erzeugt. Die Dicke der Membran 5 wird anschließend lokal durch Ionenätzen weiter verringert, um die entsprechende Struktur mit Vertiefungen 2 in einer oder beiden Oberflächen der Membran 5 zu erzeugen. Hierfür können bei kleineren Membrangrößen konventionelle Ätzanlagen zur elektronenmikroskopischen Querschnittspreparation zum Einsatz kommen. Größere Membranflächen können mit einer geeigneten Apparatur unter Verwendung konventioneller Ionenquellen selektiv abgedünnt werden. Eine weitere Möglichkeit besteht in der Verwendung der Focussed Ion Beam (FIB) Technologie.

Figur 3 zeigt das Ergebnis dieses Schrittes anhand der dargestellten Membran 5 mit den entsprechenden (nicht maßstäblichen) Poren 4 und der an der Oberfläche durch Ionenätzen eingebrachten Vertiefung 2. Im rechten Teil der Figur ist zu erkennen, dass die entsprechende Vertiefung 2 auch an der gegenüberliegenden Oberfläche in die Aluminiumoxidmembran 5 eingebracht ist. Dies ist aus Gründen der mechanischen Stabilität von Vorteil, jedoch nicht zwingend erforderlich. Je nach der geforderten Anwendung können einzelne oder mehrere dieser Vertiefungen 2 auf beiden Seiten der Membran 5 erzeugt werden. Die Größe der Vertiefungen wird durch den Durchmesser des Ionenstrahls bestimmt. Örtlich können dabei Aspektverhältnisse von 1 : 1 erreicht werden.

Die mechanische Stabilität der in Figur 3 dargestellten Membran wird durch den Verbund der wesentlich dickeren, nicht abgedünnten Membranbereiche 3 erreicht.

Die vorliegende nanoporöse Filter- oder Trägermembran lässt sich neben dem Einsatz als Filter auch als Trägermaterial bspw. für die Kultivierung von primären Zellen und von Zellkulturlinien einsetzen. So ist es in einem permanent betriebenen Zweikammer-Perfusionssystem, in dem Zellkulturen (Zelllinie oder primäre Zellkulturen) auf beiden Seiten einer porösen Unterlage wachsen, möglich, die apikale und basolaterale Zellseite getrennt zu perfundieren. Durch die nanoporöse Membran findet ein Stoffaustausch zwischen den Zellen auf der Ober- und Unterseite statt. Die beiden Zellkulturen kommen dabei jedoch nicht direkt untereinander in Kontakt, wenn die Porendurchmesser klein genug gewählt werden. Der Stoffaustausch kann erfindungsgemäß durch geeignete Wahl der Dicke der dünnen Membranbereiche bzw. durch das Aspektverhältnis der Poren erst ermöglicht bzw. gezielt eingestellt und dessen Auswirkung auf Stoffwechsel und Produktionsleistung der Zellen kontinuierlich verfolgt werden. Die räumlich getrennte Kokultivierung von parenchymalen und nichtparenchymalen Zellen erlaubt auch gezielte Untersuchungen zu Signalstofftransporten zwischen unterschiedlichen Zellarten. Der Signaltransfer kann auch hier durch die Dicke der dünneren Membranbereiche und das Aspektverhältnis gesteuert werden.

### Bezugszeichenliste

- 1: Aluminiumfolie
- 2: Vertiefungen
- 3: Dicke Membranbereiche bzw. Stege
- 4: Poren
- 5: Nanoporöse Membran
- 6: Stempel

## Patentansprüche

1. Verfahren zur Herstellung einer nanoporösen Filter- oder Trägermembran nach Anspruch 8 (5), bei dem durch anodische Oxidation eines metallischen Ausgangssubstrats oder einer metallischen Ausgangsfolie (1) eine poröse Schicht mit Poren (4) eines vorgebbaren Porendurchmessers und einer vorgebbaren Porentiefe gebildet und gegebenenfalls vom restlichen Ausgangssubstrat abgelöst wird, und anschließend die Poren (4) beidseitig geöffnet werden, um die nanoporöse Membran (5) zu erhalten, **dadurch gekennzeichnet,**
**dass** vor der anodischen Oxidation zumindest eine Oberfläche des Ausgangssubstrats oder der Ausgangsfolie (1) und/oder nach der anodischen Oxidation zumindest eine Oberfläche der Membran (5) durch Erzeugen von Vertiefungen (2) strukturiert wird, deren laterale Dimensionen den Porendurchmesser um ein Vielfaches übersteigen.

2. Verfahren nach Anspruch 1,
**dadurch gekennzeichnet,**
**dass** die Vertiefungen (2) mit einer Tiefe von zumindest 20 µm erzeugt werden.

3. Verfahren nach Anspruch 1 oder 2,
**dadurch gekennzeichnet,**
**dass** die Strukturierung der Oberfläche des Ausgangssubstrats oder der Ausgangsfolie (1) mechanisch erfolgt.

4. Verfahren nach einem der Ansprüche 1 bis 3,
**dadurch gekennzeichnet,**
**dass** die Strukturierung der Oberfläche der Membran (5) durch Ionenätzen erfolgt.

5. Verfahren nach einem der Ansprüche 1 bis 4,
**dadurch gekennzeichnet,**
**dass** die Membran(5) anschließend an der Oberfläche oxidiert und/oder zusätzlich beschichtet wird, um eine Oberflächenpassivierung oder eine Oberflächenhydrophobierung zu erhalten.

6. Verfahren nach einem der Ansprüche 1 bis 5,
**dadurch gekennzeichnet,**
**dass** die Strukturierung beidseitig symmetrisch erfolgt, so dass sich die Vertiefungen (2) jeweils gegenüber liegen.

7. Verfahren nach einem der Ansprüche 1 bis 6,
**dadurch gekennzeichnet,**
**dass** das beidseitige Öffnen der Poren (4) mit einem nasschemischen Ätzschritt erfolgt.

8. Nanoporöse Filter- oder Trägermembran mit einer beidseitig offenen Porenstruktur,
**dadurch gekennzeichnet,**
**dass** zumindest eine Oberfläche einer die Porenstruktur aufweisenden Membranschicht der Membran (5) durch Vertiefungen (2) strukturiert ist, deren laterale Dimensionen einen Porendurchmesser von Poren (4) der Porenstruktur um ein Vielfaches übersteigen.

9. Membran nach Anspruch 8,
**dadurch gekennzeichnet,**
**dass** die Vertiefungen (2) eine Tiefe von zumindest 20 µm aufweisen.

10. Membran nach Anspruch 8 oder 9,
**dadurch gekennzeichnet,**
**dass** die Membran (5) an der Oberfläche oxidiert und/oder beschichtet ist, um eine Oberflächenpassivierung oder eine Oberflächenhydrophobierung zu erhalten.

11. Membran nach einem der Ansprüche 8 bis 10,
**dadurch** gekenntzeichnet,
dass die Vertiefungen (2) symmetrisch auf beiden Oberflächen der Membran (5) ausgebildet sind, so dass sie sich jeweils gegenüber liegen.

12. Verwendung der Membran nach einem der Ansprüche 8 bis 11 als Träger für Zellkulturen, die auf beiden Seiten der Membran aufgebracht werden, um eine Kommunikation der Zellkulturen durch die Poren hindurch zu erreichen.

## Claims

1. A method for the production of a nanoporous filter membrane or carrier membrane (5) according to claim 8, wherein a porous layer with pores (4) of a preselectable pore diameter and a preselectable pore depth is formed by anodic oxidation of a metallic initial substrate or a metallic initial foil (1) and, if necessary, detached from the remaining initial substrate, and the pores (4) are then opened on both sides in order to obtain the nanoporous membrane (5), **characterised in that**
before the anodic oxidation at least one surface of the initial substrate or the initial foil (1) and/or after the anodic oxidation at least one surface of the membrane (5) is structured by producing depressions (2), the lateral dimensions whereof exceed the pore diameter many times over.

2. The method according to claim 1,
**characterised in that**
the depressions (2) are produced with a depth of at least 20 µm.

3. The method according to claim 1 or 2,
**characterised in that**
the structuring of the surface of the initial substrate or the initial foil (1) takes place mechanically.

4. The method according to any one of claims 1 to 3,
**characterised in that**
the structuring of the surface of the membrane (5) takes place by ionic etching.

5. The method according to any one of claims 1 to 4,
**characterised in that**
the membrane (5) is then oxidised and/or additionally coated at the surface, in order to obtain a surface passivation or a surface hydrophobisation.

6. The method according to any one of claims 1 to 5,
**characterised in that**
the structuring takes place symmetrically on both sides, so that the depressions (2) each lie opposite one another.

7. The method according to any one of claims 1 to 6,
**characterised in that**
the two-sided opening of the pores (4) takes place with a wet-chemical etching step.

8. A nanoporous filter membrane or carrier membrane with a two-sided open pore structure,
**characterised in that**
at least one surface of a membrane layer of the membrane (5) exhibiting the pore structure is structured by depressions (2), the lateral dimensions whereof exceed a pore diameter of pores (4) of the pore structure many times over.

9. The membrane according to claim 8,
**characterised in that**
the depressions (2) have a depth of at least 20 µm.

10. The membrane according to claim 8 or 9,
**characterised in that**
the membrane (5) is oxidised and/or coated at the surface, in order to obtain a surface passivation or a surface hydrophobisation.

11. The membrane according to any one of claims 8 to 10,
**characterised in that**
the depressions (2) are formed symmetrically on both surfaces of the membrane (5), so that they each lie opposite one another.

12. Use of the membrane according to any one of claims 8 to 11 as a carrier for cell cultures, which are deposited on both sides of the membrane in order to obtain a communication of the cell cultures through the pores.

## Revendications

1. Procédé de fabrication d'une membrane filtrante ou porteuse (5) nanoporeuse selon la revendication 8, dans lequel par oxydation anodique d'un substrat initial métallique ou d'un film métallique (1) initial, on créé une couche poreuse avec des pores (4) d'un diamètre de pore prédéfinissable et d'une profondeur de pore prédéfinissable et le cas échéant, on la détache du reste du substrat initial et en ce que dans la suite, on ouvre les pores (4) des deux côtés, pour obtenir la membrane (5) nanoporeuse,
**caractérisé en ce qu'**
avant l'oxydation anodique, on structure au moins une surface du substrat initial ou du film initial (1) et/ou après l'oxydation anodique, on structure au moins une surface de la membrane (5) par création de creux (2), dont les dimensions latérales sont supérieures d'un multiple au diamètre des pores.

2. Procédé selon la revendication 1,
**caractérisé en ce que**
les creux (2) sont créés avec une profondeur d'au moins 20 µm.

3. Procédé selon la revendication 1 ou 2,
**caractérisé en ce que**
la structuration de la surface du substrat initial ou du film initial (1) s'effectue mécaniquement.

4. Procédé selon l'une quelconque des revendications 1 à 3,
**caractérisé en ce que**
la structuration de la surface de la membrane (5) s'effectue par gravure ionique.

5. Procédé selon l'une quelconque des revendications 1 à 4,
**caractérisé en ce que**
par la suite, on fait oxyder en surface et/ ou on revêt en supplément la membrane (5), pour obtenir une passivation superficielle ou une imperméabilisation superficielle.

6. Procédé selon l'une quelconque des revendications 1 à 5,
**caractérisé en ce que**
la structuration s'effectue de façon symétrique des deux côtés, de sorte que les creux (2) soient respectivement opposés.

7. Procédé selon l'une quelconque des revendications 1 à 6,
**caractérisé en ce que**
l'ouverture sur deux côtés des pores (4) s'effectue en une étape d'attaque chimique humide.

8. Membrane filtrante ou porteuse nanoporeuse avec une structure poreuse ouverte sur les deux côtés, **caractérisée en ce qu'**
au moins une surface d'une couche de la membrane (5) comportant la structure poreuse est structurée par des creux (2) dont les dimensions latérales sont supérieures d'un multiple à un diamètre de pores (4) de la structure poreuse.

9. Membrane selon la revendication 8,
**caractérisée en ce que**
les creux (2) ont une profondeur d'au moins 20 µm.

10. Membrane selon la revendication 8 ou 9,
**caractérisée en ce que**
la membrane (5) est oxydée et/ou revêtue en surface, pour obtenir une passivation superficielle ou une imperméabilisation superficielle.

11. Membrane selon l'une quelconque des revendications 8 à 10,
**caractérisée en ce que**
les creux (2) sont conçus de façon symétrique sur les deux surfaces de la membrane (5), de sorte à être respectivement opposés.

12. Utilisation de la membrane selon l'une quelconque des revendications 8 à 11 en tant que support de cultures cellulaires, que l'on applique sur les deux côtés de la membrane, pour obtenir une communication des cultures cellulaires à travers les pores.
